# EUROPÄISCHE PATENTSCHRIFT

(11) **EP 1 920 901 B1**
(45) Veröffentlichungstag und Bekanntmachung des Hinweises auf die Patenterteilung: **27.01.2010**
(21) Anmeldenummer: 07017540.1
(22) Anmeldetag: 07.09.2007
(51) Int. Cl.: B29C 47/12

(54) **Vorrichtung zur Halterung von Matrizen**
Device for holding templates
Dispositif destiné à la fixation de matrices

(30) Priorität: 11.11.2006 DE 102006053224
(43) Veröffentlichungstag der Anmeldung: 14.05.2008
(73) Patentinhaber: Harburg-Freudenberger Maschinenbau GmbH, 21079 Hamburg (DE)
(72) Erfinder: Lilienthal, Andreas, 22846 Norderstedt (DE)
(74) Vertreter: Klickow, Hans-Henning

(56) Entgegenhaltungen:
- DE-A1- 10 062 590
- DE-A1- 19 719 220
- JP-A- 62 025 029
- JP-A- 62 055 118
- US-B1- 6 382 944

## Beschreibung

Die Erfindung betrifft eine Vorrichtung mit einem Werkzeughalter zur Positionierung von Matrizen im Bereich eines Spritzkopfes, bei der der werkzeughalter verstellbar angeordnet ist.

Derartige Vorrichtungen werden (siehe z.B. DE 100 62 590 A1) beispielsweise verwendet, um bei Extrusionseinrichtungen zur Herstellung von Schläuchen oder Kabelummantelungen eine axiale Justierung des Werkzeuges durch Verstellung des werkzeughalters relativ zum Spritzkopf durchzuführen. Der werkzeughalter muß hierbei zum einen leicht und mit geringem Kraftaufwand verstellbar sein, ein sich zum Spritzkopf ergebender Spalt muß aber zum anderen derart abgedichtet werden,' daß in Richtung auf den Spritzkopf kein Material durch den Spalt hindurchtreten kann.

Gemäß dem Stand der Technik wird der Werkzeughalter durch eine entsprechende vorspannung gegen den Spritzkopf gepreßt und es wird hierdurch die Spaltbreite minimiert. Durch die Vorspannung des Werkzeughalters relativ zum Spritzkopf wird ebenfalls eine aus dem herrschenden Prozeßdruck resultierende Dehnung des Spritzkopfes ausgeglichen.

Die gemäß dem Stand der Technik eingesetzte Anpressung des Werkzeughalters an den Spritzkopf erfordert aufgrund der miteinander in Kontakt tretenden Flächen hohe Anpreßdrücke, um die erforderlichen Flächenpressungen bereitzustellen. Die großen Anpreßkräfte müssen andererseits bei einer Verstellung des Werkzeuges überwunden werden. In der Regel sind deshalb spezielle Verstellschrauben mit zugehörigen Hilfswerkzeugen erforderlich.

Aufgabe der vorliegenden Erfindung ist es, eine Vorrichtung der einleitend genannten Art derart zu konstruieren, daß sowohl eine hohe Dichtwirkung als auch eine leichte Verstellbarkeit erreicht werden.

Diese Aufgabe wird erfindungsgemäß dadurch gelöst, daß der Werkzeughalter mindestens einen flexiblen Dichtsteg aufweist, der relativ zu einer Halterungslängsachse geneigt angeordnet ist.

Durch die geneigte Anordnung des flexiblen Dichtsteges ist es möglich, bei einem auf den Dichtsteg einwirkenden Materialdruck die Dichtwirkung dadurch zu erhöhen, daß der Dichtsteg durch den Materialdruck gegen eine zugeordnete Bezugsfläche gepreßt wird. Ohne einwirkenden Materialdruck ist der Dichtsteg hingegen unbelastet und kann relativ zur Bezugsfläche positioniert werden.

Eine erhöhte Dichtwirkung kann dadurch erreicht werden, daß mindestens zwei Dichtstege im wesentlichen parallel zueinander angeordnet sind.

Für die Durchführung von Extrusionsvorgängen erweist es sich als vorteilhaft, daß der Dichtsteg im wesentlichen radial zur Halterungslängsachse angeordnet ist.

Eine erhöhte Dichtwirkung der Lamellen bei einwirkenden Innendrücken wird dadurch erreicht, daß sich der Dichtsteg ausgehend von einem Grundkörper des Werkzeughalters mit einer Ausdehnungskomponente entgegen einer Materialförderrichtung erstreckt.

Ein typischer Neigungswinkel ist dadurch definiert, daß der Dichtsteg relativ zur Halterungslängsachse eine Neigung in einem Winkelbereich von 20 bis 70 Grad aufweist.

Ein guter Kompromiß zwischen einer ausreichenden mechanischen Stabilität und einer elastischen Biegbarkeit wird dadurch bereitgestellt, daß der Neigungswinkel etwa 45 Grad beträgt.

Insbesondere wird eine bei steigenden Produktdrücken zunehmende Dichtwirkung dadurch erreicht, daß der Dichtsteg derart geneigt angeordnet ist, daß bei Auftreten eines Innendruckes in einem Gehäuseinnenraum des Spritzkopfes eine Anpressung des Dichtsteges an eine Andruckfläche des Spritzkopfes vorgegeben ist.

Eine Positionsveränderung des Werkzeughalters wird dadurch unterstützt, daß der Werkzeughalter auf mindestens einer Gleitscheibe gelagert ist.

Aufgrund der leichten verstellbarkeit des werkzeughalters bei gleichzeitig hoher Dichtwirkung ist es möglich, daß der Werkzeughalter mit einer automatischen Verstellung gekoppelt ist.

Eine bevorzugte Anwendung ist darin zu sehen, daß der Spritzkopf zur Extrusion von Produkten ausgebildet ist.

Insbesondere ist daran gedacht, daß der Spritzkopf zur Herstellung von schlauchartigen Produkten ausgebildet ist.

In den Zeichnungen sind Ausführungsbeispiele der Erfindung schematisch dargestellt. Es zeigen:
- Fig. 1: eine Seitenansicht einer Vorrichtung mit Spritzkopf und Werkzeughalter zur Positionierung von Matrizen,
- Fig. 2: ein Längsschnitt gemäß Schnittlinie II-II in Fig. 1,
- Fig. 3: eine Seitenansicht gemäß Blickrichtung III in Fig. 2,
- Fig. 4: eine vergrößerte Darstellung der Einzelheit IV in Fig. 2 und
- Fig. 5: eine vergrößerte Darstellung eines Längsschnittes durch den Werkzeughalter.

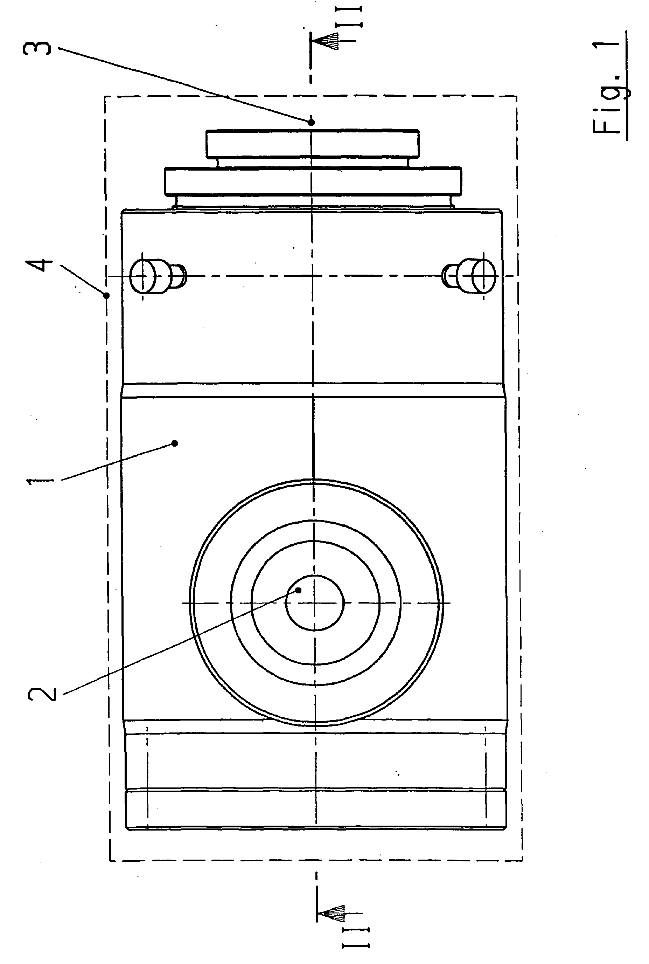

Fig. 1 zeigt eine Seitenansicht der Vorrichtung. Ein Gehäuse (1) ist mit einem Materialeintritt (2) sowie einem Materialauslaß (3) versehen. Das Gehäuse (1) ist als Teil eines Spritzkopfes (4) ausgebildet.

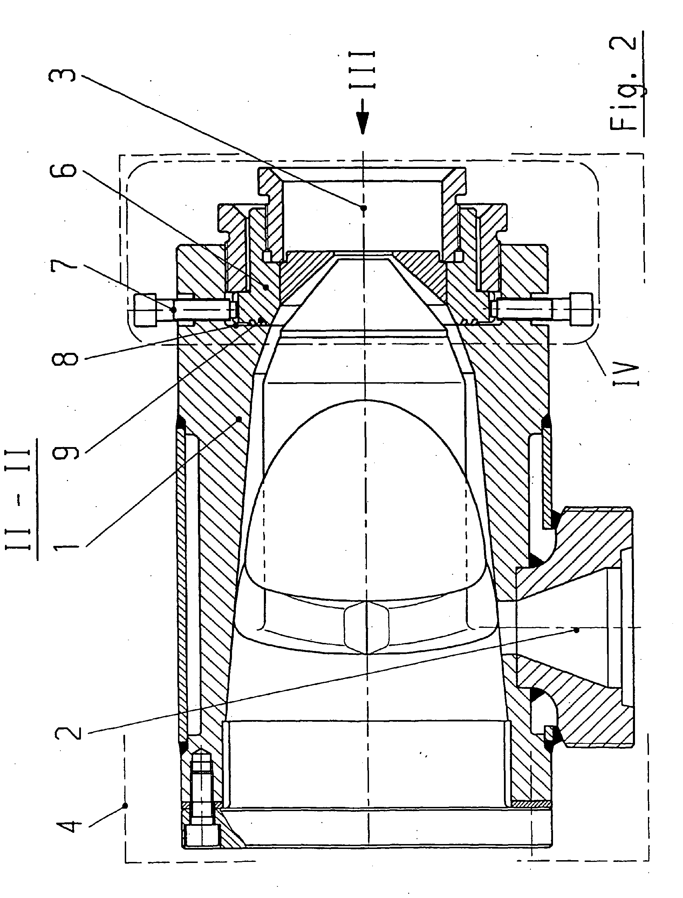

Aus dem Längsschnitt in Fig. 2 ist zu erkennen, daß der Spritzkopf (4) mit einem Werkzeughalter (6) versehen ist, der zur Halterung einer Matrize vorgesehen ist. Der Werkzeughalter (6) ist relativ zum Spritzkopf (4) verstellbar angeordnet und wird in einer vorgewählten Position von einem Fixierelement (7) arretiert. Das Fixierelement (7) kann beispielsweise als Schraubenbolzen ausgeführt sein.

Im Bereich seiner einer Andruckfläche (8) des Spritzkopfes (4) zugewandten Ausdehnung weist der Werkzeughalter (6) flexible Dichtstege (9) auf.

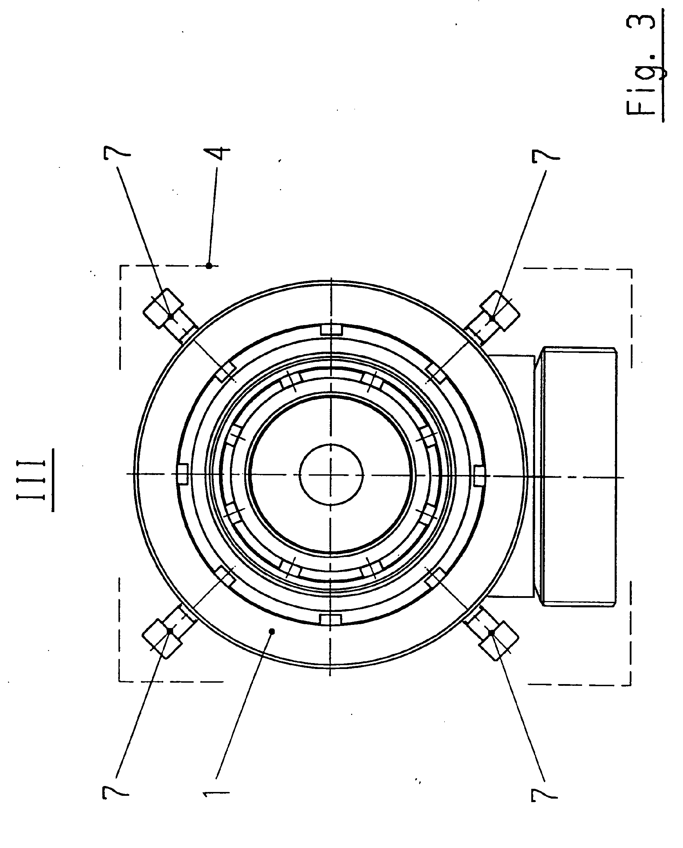

Fig. 3 zeigt den Spritzkopf (4) in einer Frontalansicht gemäß Blickrichtung III in Fig. 2. Es ist zu erkennen, daß eine Mehrzahl von Fixierelementen (7) verwendet werden. Beim dargestellten Ausführungsbeispiel sind vier im wesentlichen relativ zueinander gleichmäßig über einen Umfang verteilte Fixierelemente (7) verwendet.

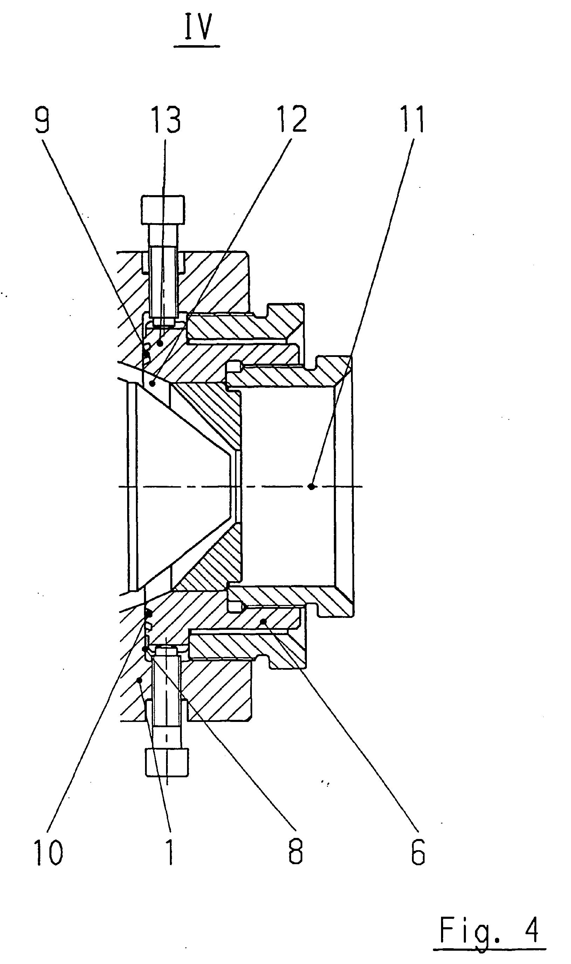

Fig. 4 zeigt eine vergrößerte Darstellung der Einzelheit IV aus Fig. 2. Es sind insbesondere die Dichtstege (9) des Werkzeughalters (6) klar zu erkennen. Durch die Dichtstege (9) werden im wesentlichen parallel zueinander angeordnete Schlitze (10) begrenzt. Die Dichtstege (9) verlaufen relativ zu einer Halterungslängsachse (11) geneigt. Die Neigung ist hierbei derart vorgesehen, daß die Dichtstege (9) bei einer von einem Gehäuseinnenraum (12) ausgehenden Druckbeaufschlagung gegen die Andruckfläche (8) gepreßt werden. Die Dichtstege (9) verlaufen deshalb ausgehend von einem Grundkörper (13) des werkzeughalters (6) mit einem abnehmenden Abstand zur Halterungslängsachse (11). Beim dargestellten Ausführungsbeispiel beträgt der Neigungswinkel der Dichtstege (9) etwa 40 °Grad.

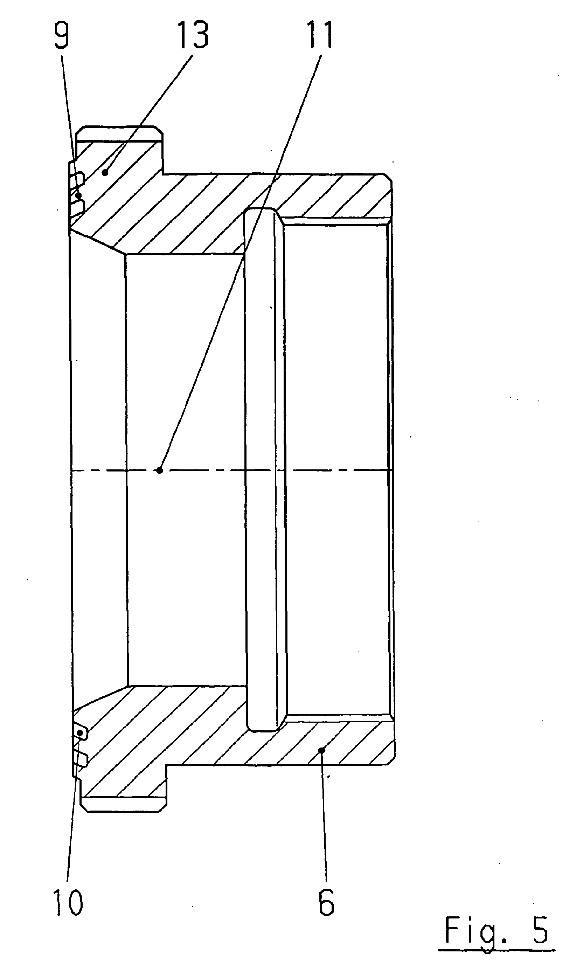

Fig. 5 zeigt den Werkzeughalter (6) in einer vom Spritzkopf (4) abgenommenen Positionierung. Auch hier ist noch einmal der geneigte Verlauf der Dichtstege (9) deutlich zu erkennen.

## Patentansprüche

1. vorrichtung mit einem werkzeughalter zur Positionierung von Matrizen im Bereich eines Spritzkopfes, bei der der werkzeughalter verstellbar angeordnet ist, wobei der Werkzeughalter (6) mindestens einen flexiblen Dichtsteg (9) aufweist, **dadurch gekennzeichnet, daß** der Dichtsteg (9) relativ zu einer Halterungslängsachse (11) geneigt angeordnet ist.

2. Vorrichtung nach Anspruch 1, **dadurch gekennzeichnet, daß** mindestens zwei Dichtstege (9) im wesentlichen parallel zueinander angeordnet sind.

3. Vorrichtung nach einem der Ansprüche 1 oder 2, **dadurch gekennzeichnet, daß** der Dichtsteg (9) im wesentlichen radial zur Halterungslängsachse (11) angeordnet ist.

4. Vorrichtung nach einem der Ansprüche 1 bis 3, **dadurch gekennzeichnet, daß** sich der Dichtsteg (9) ausgehend von einem Grundkörper (13) des werkzeughalters (6) mit einer Ausdehnungskomponente entgegen einer Materialförderrichtung erstreckt.

5. Vorrichtung nach einem der Ansprüche 1 bis 4, **dadurch gekennzeichnet, daß** der Dichtsteg (9) relativ zur Halterungslängsachse (11) eine Neigung in einem winkelbereich von 20 bis 70 Grad aufweist.

6. Vorrichtung nach Anspruch 5, **dadurch gekennzeichnet, daß** der Neigungswinkel etwa 45 Grad beträgt.

7. Vorrichtung nach einem der Ansprüche 1 bis 6, **dadurch gekennzeichnet, daß** der Dichtsteg (9) derart geneigt angeordnet ist, daß bei Auftreten eines Innendruckes in einem Gehäuseinnenraum (12) des Spritzkopfes (4) eine Anpressung des Dichtsteges (9) an eine Andruckfläche (8) des Spritzkopfes (4) vorgegeben ist.

8. Vorrichtung nach einem der Ansprüche 1 bis 7, **dadurch gekennzeichnet, daß** der werkzeughalter (6) auf mindestens einer Gleitscheibe gelagert ist.

9. Vorrichtung nach einem der Ansprüche 1 bis 8, **dadurch gekennzeichnet, daß** der werkzeughalter (6) mit einer automatischen Verstellung gekoppelt ist.

10. Vorrichtung nach einem der Ansprüche 1 bis 9, **dadurch gekennzeichnet, daß** der Spritzkopf (4) zur Extrusion von Produkten ausgebildet ist.

11. Vorrichtung nach einem der Ansprüche 1 bis 10, **dadurch gekennzeichnet, daß** der Spritzkopf (4) zur Herstellung von schlauchartigen Produkten ausgebildet ist.

## Claims

1. Device with a tool-holder for positioning dies in the region of an extruding head, in which device the tool-holder is arranged in an adjustable manner, wherein the tool-holder (6) has at least one flexible sealing web (9), **characterised in that** the sealing web (9) is arranged in an inclined manner, relative to a longitudinal axis (11) of the holding arrangement.

2. Device according to claim 1, **characterised in that** at least two sealing webs (9) are arranged substantially parallel to one another.

3. Device according to either of claims 1 or 2, **characterised in that** the sealing web (9) is arranged substantially radially in relation to the longitudinal axis (11) of the holding arrangement.

4. Device according to one of claims 1 to 3, **characterised in that** the sealing web (9) extends, starting from a base member (13) of the tool-holder (6), with a component of extension counter to a direction of conveyance of the material.

5. Device according to one of claims 1 to 4, **characterised in that** the sealing web (9) has an inclination, relative to the longitudinal axis (11) of the holding arrangement, within an angular range of 20 to 70 degrees.

6. Device according to claim 5, **characterised in that** the angle of inclination amounts to about 45 degrees.

7. Device according to one of claims 1 to 6, **characterised in that** the sealing web (9) is arranged so as to be inclined in such a way that the occurrence of an internal pressure in an interior space (12) in the casing of the extruding head (4) necessarily involves the pressing of the sealing web (9) against a pressure-applying face (8) of the extruding head (4).

8. Device according to one of claims 1 to 7, **characterised in that** the tool-holder (6) is mounted on at least one sliding disc.

9. Device according to one of claims 1 to 8, **characterised in that** the tool-holder (6) is coupled to an automatic adjusting system.

10. Device according to one of claims 1 to 9, **characterised in that** the extruding head (4) is designed for extruding products.

11. Device according to one of claims 1 to 10, **characterised in that** the extruding head (4) is designed for manufacturing hose-like products.

## Revendications

1. Dispositif avec un porte-outil, pour le positionnement de matrices dans la zone d'une tête d'injection, dans lequel le porte-outil est agencé de manière déplaçable, le porte-outil (6) présentant au moins une patte d'étanchéité (9) flexible, **caractérisé en ce que** la patte d'étanchéité (9) est disposée en étant inclinée par rapport à un axe longitudinal de fixation (11).

2. Dispositif selon la revendication 1, **caractérisé en ce que** deux pattes d'étanchéité (9) au moins sont disposées sensiblement parallèlement l'une par rapport à l'autre.

3. Dispositif selon l'une des revendications 1 ou 2, **caractérisé en ce que** la patte d'étanchéité (9) est essentiellement disposée radialement par rapport à l'axe longitudinal de fixation (11).

4. Dispositif selon l'une des revendications 1 à 3, **caractérisé en ce que** la patte d'étanchéité (9) s'étend, à partir d'un corps de base (13) du porte-outil (6), avec une extension dans un sens opposé à une direction de transport de matière.

5. Dispositif selon l'une des revendications 1 à 4, **caractérisé en ce que** la patte d'étanchéité (9) présente, par rapport à l'axe longitudinal de fixation (11), une inclinaison, dont l'angle est situé dans une plage de 20 à 70 degrés.

6. Dispositif selon la revendication 5, **caractérisé en ce que** l'angle d'inclinaison est d'environ 45 degrés.

7. Dispositif selon l'une des revendications 1 à 6, **caractérisé en ce que** la patte d'étanchéité (9) est inclinée de sorte que, lors de la manifestation d'une pression intérieure dans un espace intérieur (12) du carter de la tête d'injection (4), la patte d'étanchéité (9) est pressée contre une surface de contact (8) de la tête d'injection (4).

8. Dispositif selon l'une des revendications 1 à 7, **caractérisé en ce que** le porte-outil (6) est monté sur au moins un plateau coulissant.

9. Dispositif selon l'une des revendications 1 à 8, **caractérisé en ce que** le porte-outil (6) est couplé avec un système de déplacement automatique.

10. Dispositif selon l'une des revendications 1 à 9, **caractérisé en ce que** la tête d'injection (4) est conçue pour l'extrusion de produits.

11. Dispositif selon l'une des revendications 1 à 10, **caractérisé en ce que** la tête d'injection (4) est conçue pour la fabrication de produits en forme de tuyaux flexibles.
